# EUROPEAN PATENT SPECIFICATION

(11) **EP 1 101 517 B1**
(45) Date of publication and mention of the grant of the patent: **05.04.2006**
(21) Application number: 00124305.4
(22) Date of filing: 15.11.2000
(51) Int. Cl.: B01D 19/00, F16K 24/04

(54) **Bubble-removing apparatus**
Vorrichtung zum Eliminieren von Blasen
Dispositif d'élimination des bulles

(30) Priority: 18.11.1999 JP 32771599
(43) Date of publication of application: 23.05.2001
(73) Proprietor: Satoh Jushi Kogyo Co., Ltd., Edogawa-ku, Tokyo (JP)
(72) Inventor: Satoh, Kanji, Edogawa-ku, Tokyo (JP)
(74) Representative: Klingseisen, Franz

(56) References cited:
- WO-A-90/11836
- DE-A- 10 020 828
- FR-A- 2 206 112
- US-A- 4 506 562
- PATENT ABSTRACTS OF JAPAN vol. 012, no. 332 (M-738), 8 September 1988 (1988-09-08) & JP 63 093625 A (DAIHATSU MOTOR CO LTD), 23 April 1988 (1988-04-23)

## Description

### BACKGROUND OF THE INVENTION

### (1) Technical field to which the Invention belongs

The present invention relates to a bubble-removing apparatus for removing bubbles entrained in a liquid when various fluids such as water, oil or chemicals are used.

### (2) Prior art

Various fluids are used for various purposes. In such use, inconvinience is often caused when bubbles are entrained in the fluids. For example, in a cleaning step of semiconductor production, a cleaning solution composed of acidic chemicals or alkaline chemicals at a constant mixing ratio, is circulated in a cleaning bath in a predetermined amount to conduct automatic cleaning of semiconductor substrates. In this case, in order to realize the cleaning effects stably with good reproducibility, it is important to maintain a constant mixing ratio of chemicals, and for this purpose, stable supply of chemicals in a predetermined amount is demanded.

Various methods have been used for measurement of supplied amount in an automatic supply of the cleaning solution. Recently, an ultrasonic flow meter which is advantageous for miniaturization of apparatus and fluctuation of pressure has been widely used. This flow meter has an advantage that the supplied amount can readily be changed and the mixing ratio of chemicals can thereby be simply adjusted automatically. However, from the aspect of its structure, the ultrasonic flow meter is suspectible to the influence of its bubbles in the cleaning solution, and accurate measurement can not be made without eliminating the bubbles. These bubbles are formed by causes, for example, the change of canisters of chemicals or pump operation by e.g. a diaphragm pump.For this reason, various types of bubble-removing apparatuses have been proposed and employed. However, in many cases, when bubbles are discharged, solution is entrained in the bubbles and are discharged together in a large amount, or a pump, a tank and a removing device are integrateed and thereby the entire apparatus becomes large in size, and an operation of a small flow amount can not be conducted.

A bubble-removing apparatus has been known wherein a liquid is fluidized by turning it in a vessel and the bubbles are collected at the central portion for removal in order to use the apparatue even when the flow amount is small. For example, this apparatus is disclosed in JP-A-11-19406. According to the description of this publication, the apparatus can be used even in a case of a liquid in a small flow amount, and is constructed to separate bubbles and collect the bubbles to the central axis of a vessel by a rotating flow and discharge the bubbles through a discharge outlet provided at the central axis of the vessel. At the discharge outlet of this apparatus, an automatic on-off valve is disposed. This valve has a mechanism whererein a spherical discharge valve floatis raised by the buoyancy of the liquid to shut a discharge outlet, and when bubbles are collected, the discharge valve float is released from the outlet by its own weight and a spring to discharge the bubbles through the outlet.

However, in the case of the on-off valve of the above mentioned apparatus, since it is necessary to use the spring to securely open the discharge outlet, when the liquid is chemicals of e.g. acid or alkali, it is dificult to maintain a stable performance for a long period of time. Futher, operation of the valve varies depending upon the balance of e.g. the discharge valve float's own weight, the spring force of the spring and the buoyancy of the discharge valve float. Accordingly, when the internal pressure inside the vessel largely changes by the flow amount of the liquid which flows into the vessel, the operation of the valve can not follow the change. For this reason, with one type of this aparatus alone, it has been impossible to treat a liquid which is to be used for the case where the flow amount largely changes.

A bubble-removing apparatus has been known wherein an air bent having a ball valve, using simply a ball and not using a spring, is disposed at the discharge outlet. However, in this structure, the ball is unstable, and when the flow amount increases, the ball will float in the air bent and the liquid will flow out together with the bubbles. Further, when the ball is raised and shuts the discharge outlet of the air bent, the liquid containing bubbles will flow out from the outflow port of the bubble-removing apparatus, resulting in failure of removal of bubbules. In addition, in the case of a ball, since its outward appearance is spherical, when the ball moves only a little, the liquid flows into the air bent and the air bent is filled with the liquid, whereby the ball is made further unstable and it becomes difficult to keep balance with the flow amount.

Further, a pump is used in order to permit the liquid to flow into a cleaning solution or the like through the above bubble removing apparauts. However, in usual, the pump does not necessarily create a constant pressure at all times. Particularly, with diaphragm pumps, air-actuated pump and the like, the pressure can not be kept constant and pulsation is caused, whereby the flow amount becomes unstable due to the transfer of such pulsation, and problems may sometimes be caused when the above liquid is used in the in the subsequent step.

The document PATENT ABSTRACTS OF JAPAN vol. 012, no. 332 (M-738) describes a gas separator for a fuel tank comprising a float valve.

### SUMMARY OF THE INVENTION

It is an object of the present invention to provide a bubble-removing apparatus which can be used also for removal of bubbles from a liquid of a small flow amount, and by which only bubbles can be securely removed without permitting the liquid to flow out from the discharge outlet of the bubbles and it is possible to cope with a large change of a flow amount only by one type of apparatus alone.

It is another object of the present invention to provide a bubble-removing apparatus, by which pulsation can be buffered and at the same time bubbles can be removed, even when a pump which tends to create the pulsation in flow amount like the above mentioned diagphram pump or the like, is used.

The bubble-removing apparatus of the present invention comprises a main body; a cylindrical inflow space;an inverted conical space which communicates with the inflow space; a little cylindrical outflow space which communicates with the inverted conical space: an inflow port which opens to the inflow space and an outflow port which opens to the outflow space, both being provided in a tangential direction of the inflow space and the outflow space, respectively, so that a fluid can rotate and flow in the spaces; an axial shaft at the center; and a discharge outlet of bubbles at a central upper portion of the in flow space,
wherein a valve chamber is formed between the discharge outlet and the inflow space; a cylinder having a through hole which opens to the inflow space; a cylinder having a through hole which opens to the inflow space in the valve chamber; a cap-like having a cylindrical wall which surrounds the cylindrical and has an upper plate which closes the upper end portion of the cylinder wall, is formed; and the float is loosely capped with an upper portion of the cylinder and at the same time, disposed in the valve chamber in an upwardly an downwardly movable state while permitting a narrow gap. The above objects are thereby accomplished.

### BRIEF EXPLANATION OF THE DRAWINGS

Fig. 1 is a sectional view showing an example of the present invention.
Fig. 2 is a plane view.
Fig. 3(A) to 3(C) are views illustrating the operation of a float and showing an enlarged view of a narrow gap, for the sake of explanation. Fig. 3(A) illustrates the case where the float moves down. Fig. 3(B) illustrates the case where the float is raised. Fig. 3(C) illustrates the case where the float is raised to the uppermost part.
Fig. 4 is a partial sectional view showing another example of a valve chamber.
Fig. 5 is a partial sectional view showing a still another example of a valve chamber.
Fig. 6 is a partial sectional view showing a further example of a valve chamber.
Fig. 7 is a graph showing the change of the flow amount between the case where the bubble-removing apparatus of the present invention is used and the case where it is not used.

### PREFERRED EMBODIMENTS OF THE INVENTION

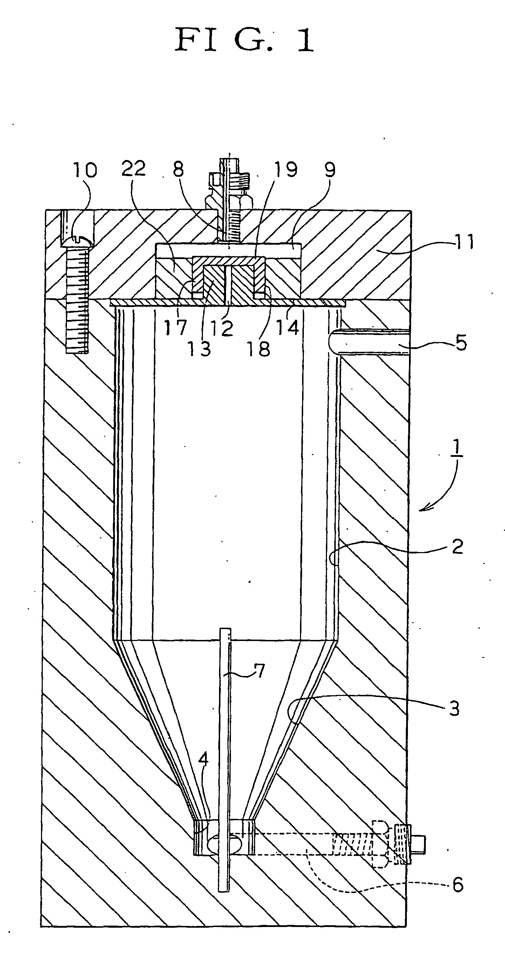

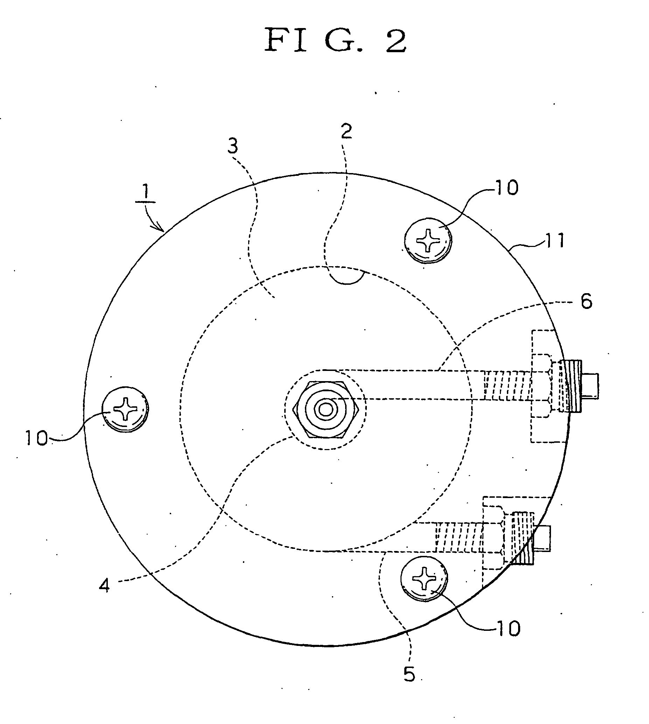

Fig. 1 and Fig. 2 are a sectional view and a plane view showing an example of the present invention. In these figures, in a cylindrical main body 1, a cylindrical inflow space 2; an inverted conical space 3 which communicates with the lower portion of the inflow space 2 and slants toward the center; and a little cylindrical outflow space 4 which communicates with the lower portion of the inverted conical space 3 and is smaller than the cylinder of the inflow space 2, are formed, and an inflow port 5 and an outflow port 6 are provided at the inflow space 2 and the outflow space 4, respetively. The inflow port 5 and outflow port 6 open to the spaces 2 and 4, respectively, in a tangential direction of these spaces so that a fluid can rotate and flow in the spaces 2, 3 and 4. The inflow port 5 may be provided in a plural number. Particularly, when the viscosity of the fluid is high, by permitting the fluid to flow into the space through the plural inflow ports, the flow amount and rotation can be increased, whereby the center of flow can be made clear and made clear and bubbles can be easily collected.

At the center of the spaces, an axial shaft 7 is provided. Bubbles which gather around the center of flow (not shown) of the fluid rotating and flowing in the spaces, are caught around the axial shaft 7, and bubbles are entrained or incorporated one another to form large bubble's core (not shown ) and the bubbles are raised along the axial shaft. At that time, the bubble s core is like a narrow column, so the bubble's core is not swung toward the inner wall side of the space by the rotating flow of the fluid and become more stable. If the axial shaft 7 becomes thick, the outflow space is narrowed, the internal pressure increases and the rise of the bubbles can be acceelerated. If the inner diameter of the outflow port 6 is made smaller than the inflow port 5, the same effect can be obtained.

At the central upper portion of the inflow space 2, a discharge outlet 8 of bubbles is formed, and between the discharge port 8 and the inflow space 2, a valve chamber 9 is formed. In the figures, the discharge port 8 and the valve chamber 9 are disposed at a cover 11 which is fixed to the main body 1 by a screw 10..., and between the main body 1 and the cover 11, an appropriate packing material (not shown) may be provided. The cover and the main body may have screws provided thereon and both may be connected by the screws. Further, after the cover is attached to the main body, the joint portion may be welded for integration.

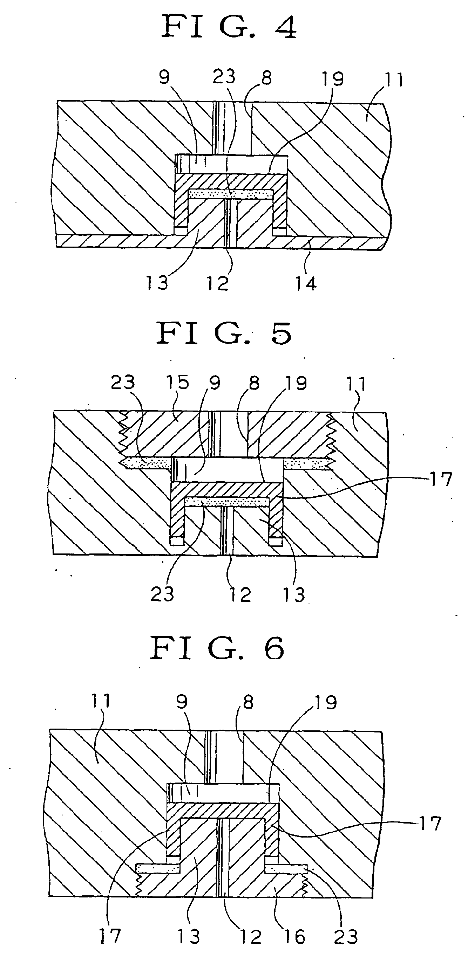

In the valve chamber 9,a cylinder 13 having a through hole 12 which opens to the inflow space 2 is provided. In Fig. 1 and Fig. 2. the cylinder 13 is integrally formed with a substrate 14 which is fitted with the upper portion of the inflow space 2 of the main body 1 and its periphery is clamped by the cover 11. However, the cylinder 13 may be formed on the cover 11 and a fixing plate 15 having a discharge outlet 8 may be screwed thereon (Fig. 5). Further, appropriate structures may be applied, for example, a fixing plate 16 having the cylinder 13 protruded therefrom, may be screwed from the lowerside into the cover 11 (Fig. 6).

To the cylinder 13 in the.valve chamber 9, is provided a float 17 which is loosely engaged with the cylinder 13 and at the same time, fitted with the valve chamber in an upwardly and downwardly movable state while permitting a narrow gap. The float 17 is formed in a cap-like shape having a cylindrical wall 18 which surrounds the cylinder 13 and has an inner diameter which is a little larger than an outer diameter of the cylinder 13. and un upper plate 19 which closes the upper end portion of the cylindrical wall 18. In a state where the plate 19 is seated on the upper portion of the cylinder 13 and the plate 19 shuts the through hole 12, the lower end of the cyindrical wall 18 does not abut the base end of the cylinder 13. In these figures, between the outer face of the float 17 and the inner face of the valve chamber 9, an outward ring 22 is engaged while permitting narrow gaps 20 and 21, respectively, so that it can move upwardly and downwardly. However, as shown in Fig. 4, the outward ring 22 may be omitted. Further, a packing 23 may be provided at an appropriate portion such as the inner face or the like of the plate 19.

With respect to the narrow gap 24 between the inner surface of the float 17 and the outer surface of the cylinder 13, the narrow gap 20 between the outer surface of the float 17 and the inner face of the valve chamber 9 (in Fig. 1 and the like, the inner surface of the outward ring 22), the narrow gap 21 on the outer surface of the outward ring 22 and the like, depending upon the properties such as the viscosity, specific gravity and the like of the liquid from which bubbles will be removed, the gaps are formed to be extremely narrow so that, preferably, only bubbles can be efficiently passed without passing the liquid. For example, in the case of a water-type liquid, the narrow gapis within a range of from about 0.05 mm to 0.3 mm, preferably from about 0.1 mm to 0.2 mm, and in the case of an oil-type liquid, the narrow gap is within a range of from about 0.2 mm to 1 mm, preferably from about 0.5 mm to 0.8 mm.

When the internal pressure in the main body increases, the float 17 is raised by the pressure, and the plate 19 comes away from the upper surface of the cylinder and lets the through hole 12 open and the bubbles pass. However,when the pressure is so large that the liquid spouts through the through hole 12, the float 17 is immediately raised upwardly so that the liquid will not flow out from the discharge port 8 of bubbles and placed directly under the discharge port 8 so that the discharge port 8 will be shut by the upper surface of the plate. The float 17 can move until the plate 19 abuts to the inner upper portion of the valve chamber 9. This movement is restricted to a level such that under usual conditions, only bubbles can be securely discharged and the discharge outlet 8 will not be shut, for example, to from about 1 to 5 mm, preferably from about 1 to 3 mm. The length of the cylindrical wall 18 of the float 17 is restricted to a level such that even if the float rises, it does not come away from the the cylinder 13.

The main body 1.cover 11, cylinder 13, float 17, outward ring 22 and the like are made from an appropriate synthetic resin material such as Teflon (fluorine resin), but may be made from an anti-corrosive metal material such as a stainless material. The plate 19 of the float 17 is formed to have flat upper and lower surfaces. However, the plate may have a protrusion (not shown)having an appropriate shape so that it fits with and shuts the through hole 12 or discharge outlet 8. Further, if the case requires, an elastic member such as an anticorrosive spring may be provided between the float and discharge outlet, but there is substantially no such necessity.

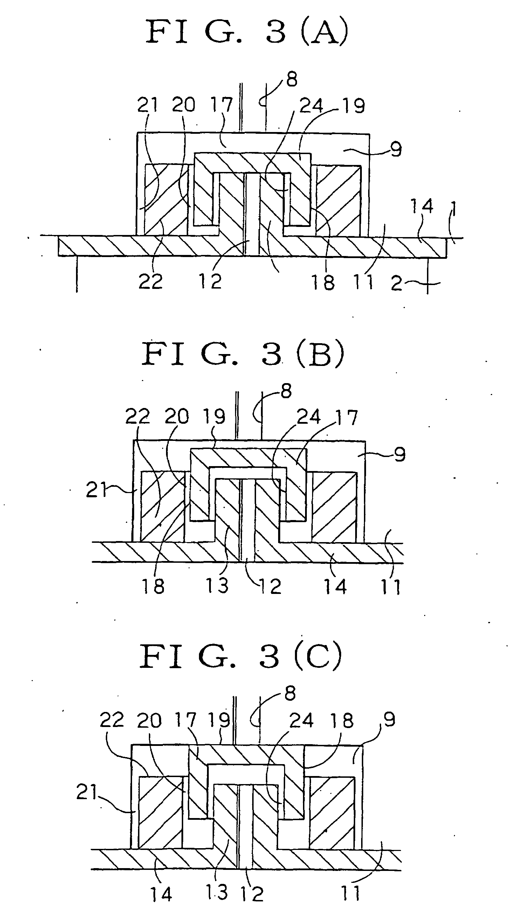

In Fig. 3(A) to 3(C), the movement of the float is illustrated, and for the sake of explanation, the respective narrow gaps are enlarged. Fig. 3(A) shows a state wherein even when the bubbles separated from the liquid rotating and flowing in the main body gather to the upper portion of the inflow space 2, the internal pressure has not been increased to a level such that it presses the float 17 upwardly. In the meantime, the internal pressure is gradually increased, and with the increassof the internal pressure, even light and small bubbles are collected to the float portion. The state of Fig. 3(A) is created also when a pump for supplying the liquid to the infow port 5 is stopped, and in this state, the float is seated on the cylinder and shuts the through hole 12; i.e., the float functions as a check valve.

When the bubbles are separated from the liquid and concentrated at the upper portion so as to sufficiently increase the internal pressure, the float 17 is pressed upwardly (Fig. 3(B)). By this his movement, the bubbles which passed through the through hole 12 pass from the lower surface of the plate 19 of the float 17 through the narrow gap 24 between the inner surface of the float and the cylinder, travel along the lower edge of the float 17. pass the narrow gap 20 at the outer periphery of the float 17, and then are removed from the discharge outlet 8. Since the internal pressure is thereby lowered, the float 17 moves down to the position as shwn in Fig.3(A) but when the internal pressure is raised again, the float 17 moves upwardly as shown in Fig. 3(B) and discharge the bubbles. By repeating this operation, the float 17 moves upwardly and downwardly, and conducts piston travel against the cylinder 13. At this time, the bubbles show the function of a lubricant between the cylinder and the float, and the float can move smoothly. Since the narrow gaps are extremely narrow as mentioned above, the liquid entrained in the mixture of the bubbles and liquid can hardly pass therethrough, and only bubbles can be discharged from the dischargle outlet.

When the internal pressure becomes extremely high by over increase of flow amount and the liquid passes through the through hole 12 and reaches the float portion, the float 17 is raised by the pressure to the position where it contacts with the inner upper portion of the valve chamber 9, and shuts the discharge outlet 8 (Fig. 3(C)). Accordingly, it is possible to prevent the liquid from flowing out from the discharge outlet 8.

### Examples

According to the results of experiments, it is possible to use a one type of apparatus alone for the removal of bubbles of a liquid which undergoes flow rate change of about 0.5 to 5.0 liters per minute. Further, under the condition wherein bubbles are entrained continuously, the amount of the mixture of the bubbles and liquid to be discharged from the discharge outlet can be reduced to about 0.066 % or less of the entire flow amount.

The effect for removal of bubbles can be confirmed by measuring the count of an ultrasonic flow meter which is susceptible to the influence of bubbles.

As a measurement device, a level sensor and an ultrasonic flow meter were used in combination, and the supply amount was adjusted to 5,500 cc per minute by the level sensor, and the count of the ultrasonic flow meter was measured when the supply was terminated in response to the adjustment.

The average count of the ultrasonic flow meter (amount calculated as the flow amount; cc) was 5,539 cc when the bubble-removing apparatus of the present invention was used for the flow meter, whereas it was 5,638 cc when a conventional bubble-removing method was used. Further, the dispersion of the count was ±2.1 % when the bubble-removing apparatus of the present invention was used, whereas it was ±6.9 % when a conventional method was used.

From this result, when the bubble-removing apparatus of the present invention was used, the average count shows the difference of 0.7 % against the adjusted value (5,500 cc), and is 1/4 of the case where the apparatus of the present invention was not used,i.e. the accuracy was improved by the present invention. Further, the dispersion of the count was about 1/3 of the case where the apparatus of the present invention was not used, and it was found that stable counts were recorded. Accordingly, the bubble-removing apparatus of the present invention securely discharged the bubbles, and it was confirmed that this apparatus can be sufficiently used for the ultrasonic flow meter which is susceptible to the influence of bubbles as mentioned above.

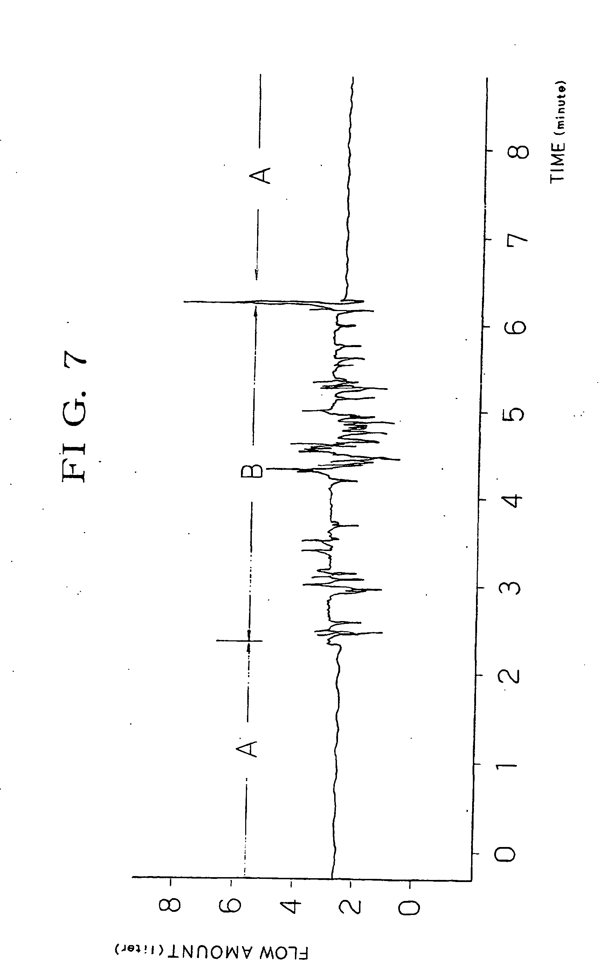

Fig. 7 is a graph showing the change of the flow rate when a liquid was supplied at a flow rate of 2.5 liters per minute using a diagphram pump. As compared with the case where the liquid was passed through the bubble-removing apparatus of the present invention (A), a large pulsation is confirmed in the case where the liquid was not passed through it (B).

As mentioned above, it was confirmed that according to the apparatus of the present invention, by the piston travel of the float and the action of the substrate 14 like a diaphragm, the internal pressure can be controlled, and the pulsation of the fluid flowing out from the discharge outlet 6 can be buffered, and in addition, by the upward and downward movement of the outward ring, the pulsation can further be removed.

The apparatus of the present invention may appropriately be constructed, for example, a filter is provided in the main body, an on-off valve is provided at the outside of the discharge outlet of bubbles for control, or or plural apparatuses are continuously connected to remove the bubbles stepwise.

The apparatus of the present invention is constructed as described above, i.e. a bubble-removing apparatus, which comprises a main body; a cylindrical inflow space; an inverted conical space which communicates with the inflow space; a little cylindrical outflow space which communicates with the inverted conical space; an inflow port which opens to the inflow space and an outflow port which opens to the outflow space, both being provided in a tangential direction of the inflow space and the outflow space, respectively, so that a fluid can rotate and flow in the spaces; an axial shaft at the center; and a dischrge outlet of bubbles at a central upper portion of the inflow space, wherein a valve chamber is formed between the discharge outlet and the inflow space; a cylinder having a through hole which opens to the inflow space in the valve chamber; a cap-like float having a cylindrical wall which surrounds the cylinder and has an upper plate which closes the upper end portion of the cylindrical wall, is formed; and the float is loosely capped with an upper portion of the cylinder and the same time, disposed in the valve chamber in an upwardly and downwardly movable state while permitting a narrow gap. Accordingly, the bubbles gathered around the central upper portion of the main body can be efficiently removed from the discharge outlet, by the piston travel of the float loosely engaged with the cylinder. The apparatus of the present invention can be applied to the case of a small flow amount. A mixture of bubbles and a liquid is hardly permitted to flow out. Even if the flow amount flowing into the main body fluctuates, it is possible to cope with the trouble within a wide range and securely remove the bubbles. Further, the internal pressure in the main body can be controlled by the piston travel of the float and pulsation can be buffered.

From the foregoing description, it can be seen that the present invention compirses an improved bubble-removing apparatus. It will be appreciated by those skilled in the art that obvious changes can be made to the embodiments described in the foregoing description without departing from the broad inventive concept thereof. It is understood, therefore, that this invention is not limited to the particular embodiments disclosed, but is intended to cover all obvious modifications thereof which are within the scope of the invention as defined by the appended claims.

## Claims

1. A bubble-removing apparatus, which comprises a main body; a cylindrical inflow space (2): an inverted conical space (3) which communicates with the inflow space; a little cylindrical outflow space (4) which communicates with the inverted conical space; an inflow port (5) which opens to the inflow space and an outflow port (6) which opens to the outflow space, both being provided in a tangential direction of the inflow space and the outflow space, respectively so that a fluid can rotate and flow in the spaces; an axial shaft at the center: and a discharge outlet of bubbles (8) at a central upper portion of the inflow space,
wherein a valve chamber (9) is formed between the discharge outlet and inflow space; a cylinder (19) having a through hole (12) which opens to the inflow space in the valve chamber; a cap-like float (17) having a cylindrical wall which surrounds the cylinder and an upper plate which closes the upper end portion of the cylindrical wall, is formed; and the float is loosely capped with an upper portion of the cylinder and at the same time, disposed in the valve chamber in an upwardly and downwardly movable state while permitting a narrow gap.

2. The bubble-removing apparatus according to Claim 1, wherein an outward ring is fitted between an outer surface of the float and an inner surface of the valve chamber while permitting a narrow gap.

3. The bubble-removing apparatus according to Claim 1, wherein the cylinder is disposed on a substrate which is engaged with an upper portion of the inflow space.

4. The bubble-removing apparatus according to Claim 1, wherein the cylindrical wall of the float has an inner diameter which is larger than an outer diameter of the cylinder.

5. The bubble-removing apparatus according to Claim 4, wherein a narrow gap between the float and the cylinder is from about 0.0.5 mm to 0.3 mm when a fluid having bubbles entrained therein is a water-type fluid.

6. The bubble-removing apparatus according to Claim 4, wherein a narrow gap between the float and the cylinder is from about 0.2 mm to 1 mm when a fluid having bubbles entrained therein is an oil-type fluid.

7. The bubble-removing apparatus according to Claim 1, wherein the plate of the float faces the discharge outlet while permitting a distance to remain, and the distance is from about 1 mm to 5 mm.

8. The bubble-removing apparatus according to Claim 1, wherein a plurality of inflow ports are provided.

## Patentansprüche

1. Vorrichtung zur Blasenentfernung, die umfasst: ein Hauptgehäuse; einen zylindrischen Einströmraum (2); einen umgekehrt konischen Raum (3), der mit dem Einströmraum in Verbindung steht; einen kleinen zylindrischen Abströmraum (4), der mit dem umgekehrt konischen Raum in Verbindung steht; eine Einlassöffnung (5), die offen gegen den Einströmraum ist und eine Auslassöffnung (6), die gegen den Auslassraum offen ist, die beiden jeweils in einer Tangentialrichtung des Einströmraums und des Ausströmraums vorgesehen sind, so dass ein Fluid in Rotation versetzt werden und in den Räumen strömen kann; eine Axialwelle in der Mitte; und ein Austragsauslass für Blasen (8) an einem zentralen oberen Teil des Einströmraums,
wobei eine Ventilkammer (9) zwischen Austragsauslass und Einströmraum ausgebildet ist; ein Zylinder (19) mit einer durchgehenden Bohrung (12), die offen gegen den Einströmraum in der Ventilkammer ist, vorgesehen ist; ein kappenartiger Schwimmer (17) mit einer zylindrischen Wand, die den Zylinder umgibt und eine obere Platte, die den oberen Endteil der zylindrischen Wandung verschließt, gebildet ist; und der Schwimmer lose mit einem oberen Teil des Zylinders kappenartig abgedeckt und gleichzeitig in der Ventilkammer in einem nach oben und unten beweglichen Zustand angeordnet ist und dabei einen schmalen Spalt belässt.

2. Vorrichtung zur Blasenentfernung nach Anspruch 1, wobei ein außen angebrachter Ring zwischen einer Außenfläche des Schwimmers und einer Innenfläche der Ventilkammer unter Belassung eines schmalen Spaltes angebracht ist.

3. Vorrichtung zur Blasenentfernung nach Anspruch 1, wobei der Zylinder auf einem Substrat angeordnet ist, das mit einem oberen Teil des Einströmraums in Eingriff kommt.

4. Vorrichtung zur Blasenentfernung nach Anspruch 1, wobei die zylindrische Wandung des Schwimmers über einen Innendurchmesser verfügt, der größer als ein Außendurchmesser des Zylinders ist.

5. Vorrichtung zur Blasenentfernung nach Anspruch 4, wobei ein schmaler Spalt zwischen dem Schwimmer und dem Zylinder zwischen 0,05 mm bis 0,3 mm beträgt, wenn ein Fluid mit darin mitgerissenen Blasen ein Fluid vom Typ Wasser ist.

6. Vorrichtung zur Blasenentfernung nach Anspruch 4, wobei ein schmaler Spalt zwischen dem Schwimmer und dem Zylinder zwischen etwa 0,2 mm bis etwa 1 mm beträgt, wenn ein Fluid mit darin mitgerissenen Blasen ein Fluid vom Typ Öl ist.

7. Vorrichtung zur Blasenentfernung nach Anspruch 1, wobei die Platte des Schwimmers dem Austragsauslass unter Belassung eines Abstandes ge-genübersteht, wobei der Abstand zwischen 1 mm und 5 mm beträgt.

8. Vorrichtung zur Blasenentfernung nach Anspruch 1, wobei eine Vielzahl von Einströmöffnungen vorgesehen sind.

## Revendications

1. Dispositif de dégazage, comprenant
un corps principal;
un espace cylindrique d'arrivée (2);
un espace conique renversé (3) communicant avec l'espace d'arrivée;
un petit espace de départ cylindrique (4) communicant avec l'espace conique inversé;
un orifice d'arrivée (5) ouvrant à l'espace d'arrivée et un orifice de départ (6) ouvert vers l'espace de départ,
tous les deux étant prévus dans une direction tangentielle de l'espace d'arrivée et l'espace de départ, respectivement en manière qu'un fluide peut circuler et couler dans les espaces; un arbre axial dans le centre;
et une sortie de décharge des bulles (8) dans une portion supérieure centrale de l'espace d'arrivée,
dans lequel une chambre de soupape (9) est formée entre la sortie de décharge et un espace d'arrivée; un cylindre (19) ayant un trou de passage (12) ouvert vers l'espace d'arrivée dans la chambre de soupape; un flotteur (17) ressemblant un bonnet, ayant une enceinte cylindrique environnant le cylindre et une plate supérieure terminant le bout de l'enceinte cylindrique est formée; et le flotteur est bonneté en manière relâchée avec une portion supérieure du cylindre et au mème temps, est disposé dans la chambre de soupape en état mobile en amont et en aval, permettant une fissure étroite.

2. Dispositif de dégazage selon la revendication 1,
dans lequel une bague extérieure est placée entre une surface extérieure du flotteur et une surface intérieure de la chambre de soupape en permettant une fissure étroite.

3. Dispositif de dégazage selon la revendication 1,
dans lequel le cylindre est disposé sur un substrat qui est engagé avec une portion supérieure de l'espace d'arrivée.

4. Dispositif de dégazage selon la revendication 1,
dans lequel l'enceinte cylindrique du flotteur a un diamètre interne qui est plus grand qu'un diamètre extérieur du cylindre.

5. Dispositif de dégazage selon la revendication 4,
dans lequel une fissure étroite entre le flotteur et le cylindre est approximativement de 0.0.5 mm à 0.3 mm, lorsqu' un fluide ayant des bulles entraînées dans lequel est un fluide de sorte de l'eau.

6. Dispositif de dégazage selon la revendication 4,
dans lequel une fissure étroite entre le flotteur et le cylindre est approximativement de 0.2 mm à 1 mm lorsqu'un fluide ayant des bulles entraînées dans lequel est un fluide du type de l'huile.

7. Dispositif de dégazage selon la revendication 1,
dans lequel le tableau du flotteur est en face de la sortie de décharge pendant permettant une distance restante, et la distance est approximativement de 1 mm à 5 mm.

8. Dispositif de dégazage selon la revendication 1,
dans lequel une pluralité des ports d'arrivée sont prévus.
